# EUROPEAN PATENT APPLICATION

(11) **EP 3 816 027 A2**
(43) Date of publication of application: **05.05.2021**
(21) Application number: 20201933.7
(22) Date of filing: 15.10.2020
(51) Int. Cl.: B62J 9/00, B62J 9/23, B62J 9/30

(54) **STORAGE BOX OF A MOTORCYCLE**

(30) Priority: 31.10.2019 TW 108139398
(71) Applicant: Kwang Yang Motor Co., Ltd., Kaohsiung City (TW)
(72) Inventor: YOU, Wen-Chen, Kaohsiung City (TW); LIANG, Chiu-Hui, Kaohsiung City (TW); CHEN, Yi-Wen, Kaohsiung City (TW); HUANG, Tsung-Chun, Kaohsiung City (TW)
(74) Representative: Pallini Gervasi, Diego

(57) **Abstract**

A storage box (10) of a motorcycle (90) is used for being fitted on the motorcycle (90). The motorcycle (90) has a frame (91) and a mounting support (95) assembled on a rear end of the frame (91). The storage box (10) is detachably mounted on the mounting support (95). The storage box (10) is provided with a handle (15). When the handle (15) is disposed at a pulled-up position, the storage box (10) is disengaged from the mounting support (95). Therefore, the storage box 10 can be detached from the mounting support (95) quickly, so as to take the storage box (10) away.

## Description

### 1. Field of the Invention

The present invention relates to a storage box of a motorcycle, especially to a storage box that is fitted on a rear end of a frame of a motorcycle and can be quickly detached.

### 2. Description of the Prior Art(s)

A storage box fitted on a rear end of a frame of a motorcycle is used for storing luggage, helmet, motorcycle accessories, and so on. When fitting the storage box to the motorcycle, a mounting support for stably fixing the storage box on the motorcycle is required to be mounted on the rear end of the frame of the motorcycle. Conventionally, the storage box is fastened to the mounting support with fasteners such as bolts. However, fixing the storage box with the fasteners is unable to allow the storage box to be quickly fitted onto or detached from the motorcycle, thereby causing inconvenience in use.

In order to facilitate detachment and installation of the storage box, a conventional quick-release storage box is hooked on a hook disposed on and protruding from the mounting support. Specifically, a lower case of the conventional storage box is hooked on the hook and is provided with a button. The button is able to release the hook from the conventional storage box when being pushed, so as to allow the conventional storage box to be quickly detached from the mounting support.

However, the conventional quick-release storage box has shortcomings as follows.
1. Since the hook protrudes from the mounting support, the hook is disposed on the mounting support after the conventional storage box is removed from the mounting support. Consequently, the hook forms a bump on the mounting support and would be damaged easily.
2. It is not intuitive to detach the conventional storage box by pushing the button.
3. A resilient element is needed to restore a position of the button. However, once the resilient element snaps, buckles or permanently deforms, the button failures.

The main objective of the present invention is to provide a storage box of a motorcycle. The storage box is fitted on the motorcycle. The motorcycle has a frame and a mounting support assembled on a rear end of the frame. The storage box is detachably mounted on the mounting support and is provided with a handle, a connecting mechanism, and a lock. The handle is selectively disposed at a storing position and a pulled-up position. When the handle is disposed at the pulled-up position, the handle drives the connecting mechanism to allow the storage box to disengage from the mounting support. The lock is connected to a locking element. When the lock is unlocked, the locking element is driven by the lock to release the handle such that the handle is able to be operated to drive the connecting mechanism to allow the storage box to disengage from the mounting support.

The main objective of the present invention is to provide a storage box of a motorcycle. The storage box is fitted on the motorcycle. The motorcycle has a frame and a mounting support assembled on a rear end of the frame. The storage box is detachably mounted on the mounting support and is provided a handle and a connecting mechanism. The handle is selectively disposed at a storing position and a pulled-up position. When the handle is disposed at the pulled-up position, the handle drives the connecting mechanism to allow the storage box to disengage from the mounting support. The motorcycle includes a tilting unit, and the tilting unit includes a left suspension unit connected to a left front wheel and a right suspension unit connected to a right front wheel. A width defined from left to right of the storage box does not exceed a center line of the left front wheel and a center line of the right front wheel, so as not to lose balance, crash, or collide with other things while riding due to the width of the storage box. The handle is disposed between the center line of the left front wheel and the center line of the right front wheel. Thus, it is easy for the rider to recognize a position of the handle in order to detach the storage box.

The main objective of the present invention is to provide a storage box of a motorcycle. The storage box is fitted on a motorcycle. The motorcycle has a frame and a mounting support. The mounting support is assembled on a rear end of the frame and has a connecting slot. The storage box is provided with a connecting hook, a handle, and a connecting mechanism. The connecting hook detachably engages in the connecting slot. The connecting mechanism includes a cam driven by the handle, a pushing rod driven by the cam, a stopper driven by the pushing rod to selectively leave the connecting slot, and a slider disposed between the pushing rod and the stopper and moving back and forth toward a front and a back of the motorcycle. When the slider moves forward, the slider pushes the stopper and the stopper moves upward to leave the connecting slot.

The storage box of the motorcycle has the following advantages.
1. When the handle is pulled to the pulled-up position, the storage box disengages from the mounting support, such that the storage box is able to be quickly detached from the mounting support. Therefore, the storage box can be pulled with one hand and be detached from the mounting support quickly, so as to take the storage box away.
2. With the handle, the cam and the pushing rod that drives the stopper to move, the storage box can be easily detached from the mounting support smoothly and directly when the handle is pulled, which is quick and convenient.
3. With push of the slider, the stopper moves upward to leave the connecting slot. Movement of removing the storage box from the mounting supporting is more reliable and the storage box can be detached more smoothly.
4. The locking element is able to be driven by the lock to abut against the cam. The locking element may have a recess that is able to avoid interference between the locking element and the cam. Accordingly, arrangement of the lock and the cam is compact.
5. Since the locking element is able to be driven by the lock to release the handle when the lock is unlocked, the storage box would not be stolen.

### IN THE DRAWINGS:

Fig. 1 is an operational side view of a storage box of a motorcycle in accordance with the present invention, showing the storage box fitted on the motorcycle;
Fig. 2A is an operational top view of the storage box of the motorcycle in Fig. 1, showing the storage box fitted on the motorcycle;
Fig. 2B is a front view of a tilting unit of the motorcycle in Fig. 2A;
Fig. 3 is an enlarged operational rear view of the storage box of the motorcycle in Fig. 1, showing the storage box fitted on a supporting panel of the motorcycle;
Fig. 4 is an operational side view in partial sectional of the storage box of the motorcycle in Fig. 1, showing the storage box fitted on the supporting panel of the motorcycle;
Fig. 5 is a cross-sectional perspective view of the storage box of the motorcycle in Fig. 1;
Fig. 6 is an enlarged perspective view of a connecting mechanism and a lock of the storage box of the motorcycle in Fig. 1;
Fig. 7 is an enlarge operational cross-sectional side view of the storage box of the motorcycle in Fig. 1, showing the storage box fitted on the supporting panel of the motorcycle;
Figs. 8 and 9 are enlarge operational cross-sectional side views of the storage box of the motorcycle in Fig. 1, showing detaching the storage box from a mounting support;
Fig. 10 is an enlarge operational cross-sectional side views of the storage box of the motorcycle in Fig. 1, showing the storage box being locked; and
Fig. 11 is an enlarged operational cross-sectional side views of the storage box of the motorcycle in Fig. 1, showing a cover being opened.

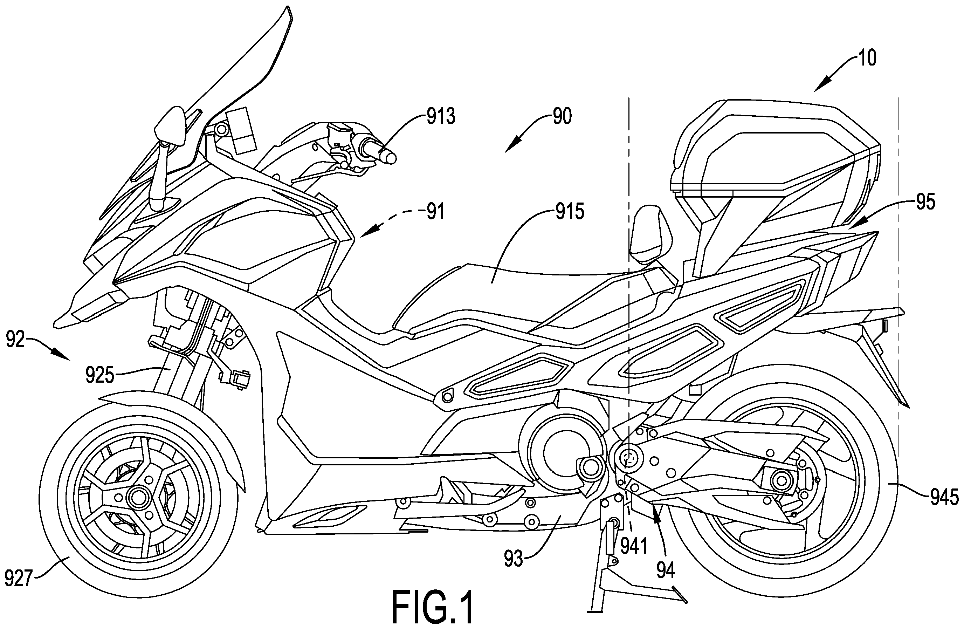

With reference to Figs. 1 to 3, a storage box 10 of a motorcycle 90 in accordance with the present invention is used for being fitted on the motorcycle 90. The motorcycle 90 has a frame 91 and a mounting support 95. The mounting support 95 is assembled on a rear end of the frame 91 and the storage box 10 is detachably mounted on the mounting support 95.

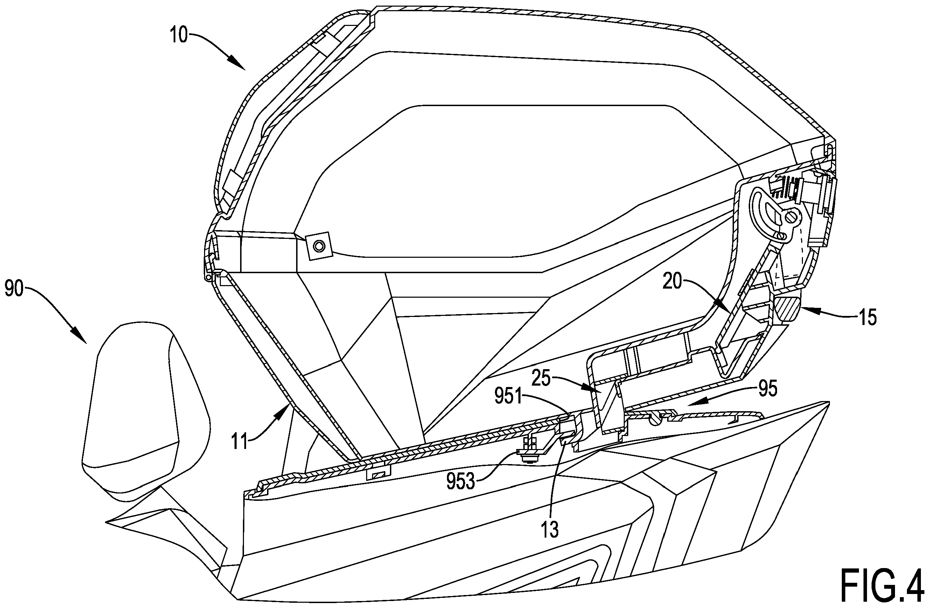

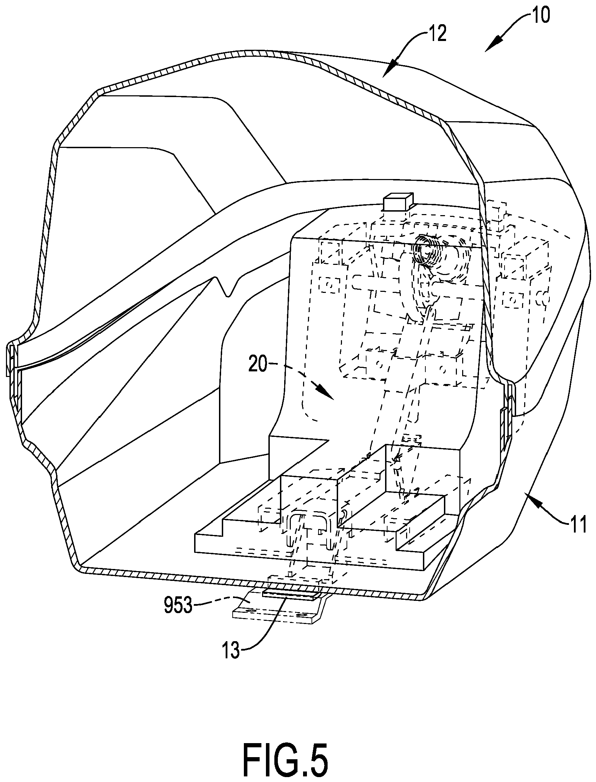

With further reference to Figs. 4 and 5, the storage box 10 is provided with a connecting hook 13, a handle 15, and a connecting mechanism 20.

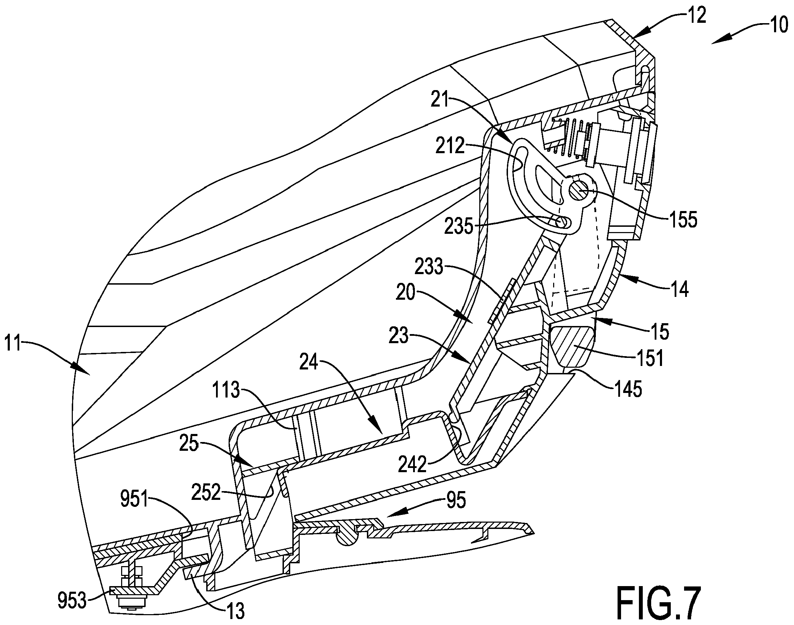

With further reference to Fig. 7, the connecting hook 13 is formed on a bottom of the storage box 10 and the mounting support 95 has a connecting slot 951. The connecting hook 13 is disposed in the connecting slot 951 and is connected with the mounting support 95. The mounting support 95 may further have a connecting block 953. The connecting block 953 is disposed under the connecting slot 951 for the connecting hook 13 to hook on the connecting block 953.

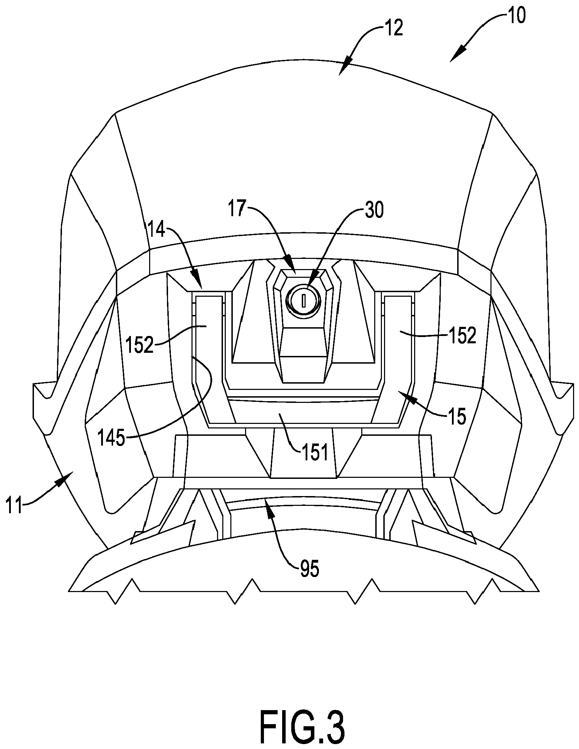

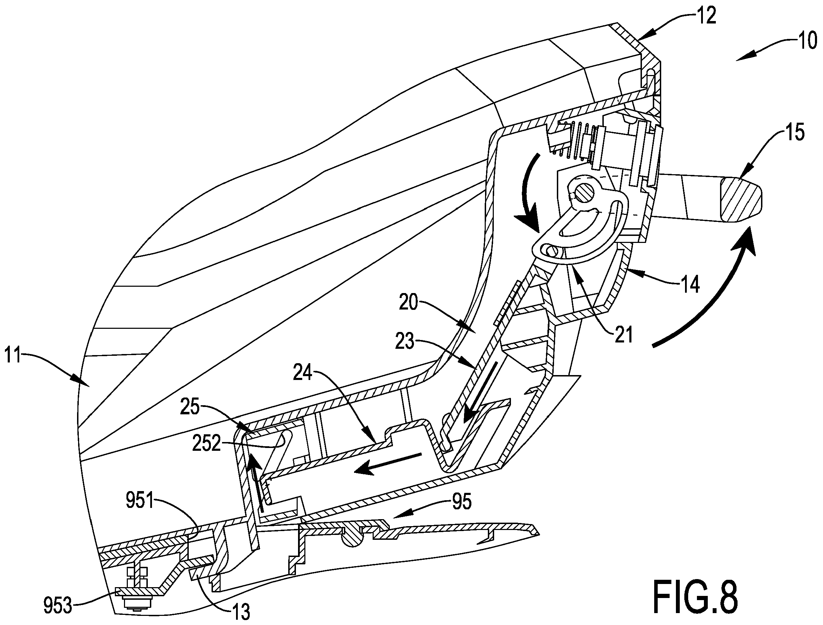

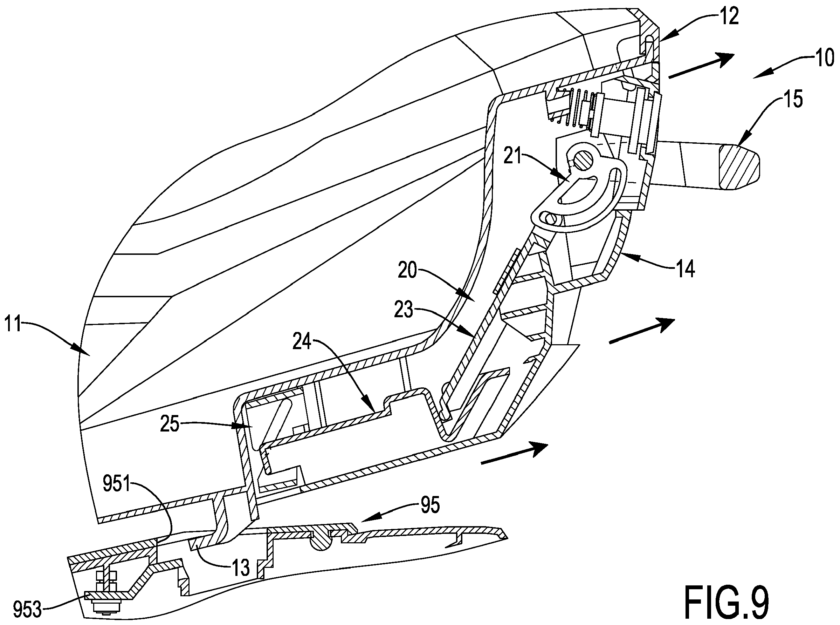

The handle 15 is pivotally connected to the storage box 10 and is disposed on a rear end of the storage box 10. As shown in Fig. 3, the handle 15 includes a holding rod 151 and two side rods 152 extending from two opposite ends of the holding rod 151 respectively. Each of the two side rods 152 has a distal end pivotally connected to the storage box 10. The handle 15 is selectively disposed at a storing position (as shown in Fig. 7) and a pulled-up position (as shown in Fig. 8). With further reference to Fig. 9, when the handle 15 is pulled to the pulled-up position, the storage box 10 disengages from the mounting support 95, such that the storage box 10 is able to be quickly detached from the mounting support 95. Therefore, the storage box 10 can be pulled with one hand and be detached from the mounting support 95 quickly, so as to take the storage box 10 away.

With reference to Figs. 5 to 7, the connecting mechanism 20 is connected to and moves along with the handle 15. The connecting mechanism 50 includes a stopper 25 moving along with the handle 15. As shown in Fig. 7, when the handle 15 is disposed at the storing position, the stopper 25 is embedded in the connecting slot 951, so as to limit movement of the connecting hook 13 and allow the storage box 10 to be securely connected with the mounting support 95. With reference to Fig. 8, when the handle 15 is disposed at the pulled-up position, the stopper 25 leaves the connecting slot 951. Accordingly, the storage box 10 can be pulled backwardly to allow the connecting hook 13 to leave the connecting slot 951.

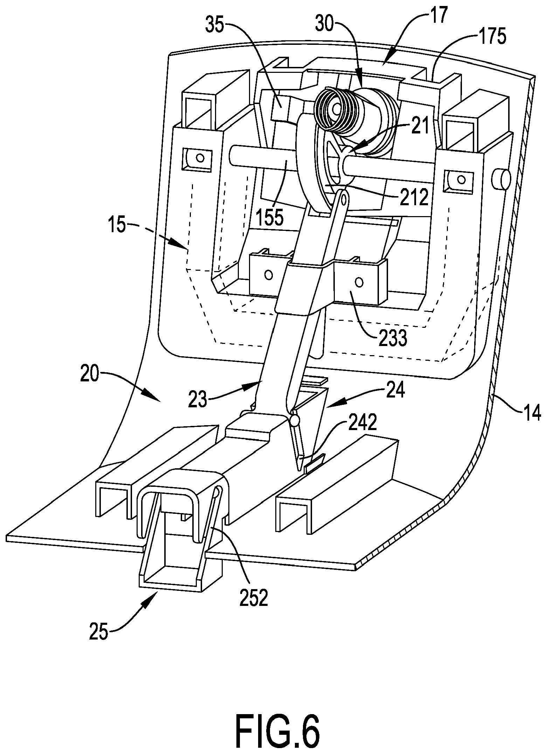

With reference to Figs. 6 and 7, the storage box 10 further has a case 11 and a cover 12. A rear end of the case 11 is provided with a mounting panel 14. The cover 12 is mounted on the case 11 and is pivotally connected with the case 11. The connecting hook 13 is formed on a bottom of the case 11. The handle 15 is pivotally connected to the mounting panel 14 and is disposed on an outer side of the mounting panel 14. The connecting mechanism 20 is connected to the handle 15 and is disposed in a receiving space defined between the mounting panel 14 and the case 11.

The connecting mechanism 20 includes a cam 21 and a pushing rod 23. The cam 21 is connected with and is driven by the handle 15 via a rotating shaft 155, such that the cam 21 moves along with movement of the handle 15. The handle 15 and the cam 21 may be connected with the rotating shaft 155 via fasteners such as spring pins, and the rotating shaft 155 is rotatably mounted to the mounting panel 14. Thus, the handle 15, the rotating shaft 155, and the cam 21 work together. The pushing rod 23 is driven by the cam 21. Specifically, the cam 21 has a sliding slot 212. The sliding slot 212 is arc-shaped and has two ends extending away from the rotating shaft 155 toward opposite directions. The pushing rod 23 is connected to the cam 21 and is slidable along the sliding slot 212. The cam 21 may be connected with the pushing rod 23 via a through shaft 235 and fasteners. Thus, when the cam 21 rotates, the pushing rod 23 is driven to slide in the sliding 212 and move diagonally up and down. Furthermore, a limit piece 233 may be further provided to limit displacement range of the pushing rod 23. The stopper 25 is driven by the pushing rod 23 to selectively leave the connecting slot 951. With the handle 15, the cam 21 and the pushing rod 23 that drives the stopper 25 to move, the storage box 10 can be easily detached from the mounting support 95 smoothly and directly when the handle 15 is pulled, which is quick and convenient.

The connecting mechanism 20 may further include a slider 24. The slider 24 is disposed between the pushing rod 23 and the stopper 25 and moves back and forth toward a front and a back of the motorcycle 90. When the slider 24 moves forward, the slider 24 pushes the stopper 25 and the stopper 25 moves upward to leave the connecting slot 951. Specifically, the slider 24 has a guiding slot 242 disposed diagonally, and the pushing rod 23 is connected to the slider 24 and is slidable along the guiding slot 242 of the slider 24. Thus, when the pushing rod 23 moves diagonally downward, the pushing rod 23 pushes the slider 24 to move forward. The stopper 25 also has a guiding slot 252 disposed diagonally. The slider 24 is connected to the stopper 25 and is slidable along the guiding slot 252 of the stopper 25. Thus, when the slider 24 moves forward, the stopper 25 is driven to move upward. Moreover, the case 11 is further provided with a guiding rib 113. The guiding rib 113 corresponds in position to the slider 24 and the stopper 25 and is used to limit sliding directions of the slider 24 and the stopper 25.

With further reference to Fig. 8, when the handle 15 is pulled to the pulled-up position, the cam 21 is driven to rotate, the slider 24 is pushed to move forward and push the stopper 25, and the stopper 25 is driven to move upward to leave the connecting slot 951. With push of the slider 24, the stopper 25 moves upward to leave the connecting slot 951. Movement of removing the storage box 10 from the mounting supporting 95 is more reliable and the storage box 10 can be detached more smoothly.

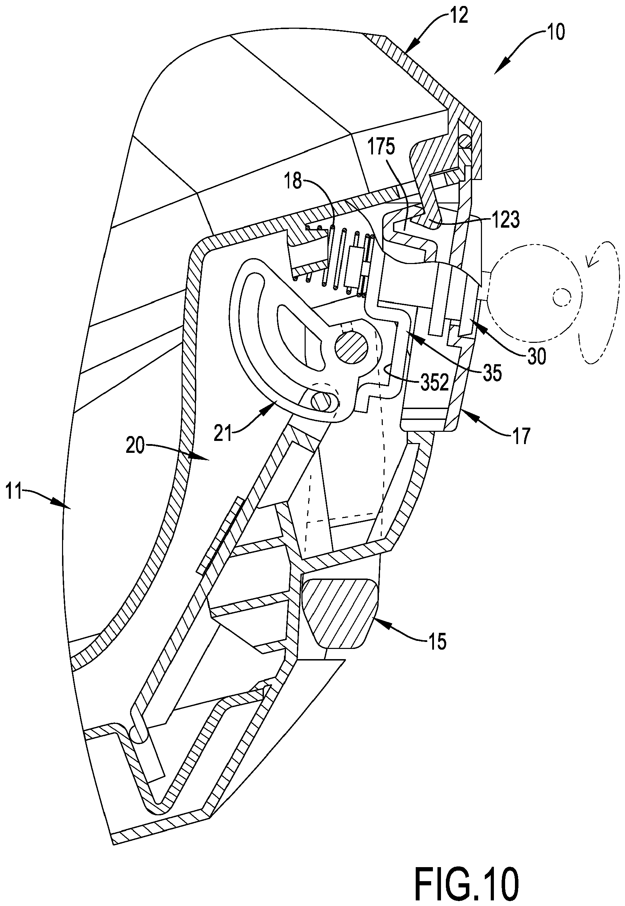

With reference to Figs. 3, 6, and 10, the storage box 10 may be further provided with a lock 30. The lock 30 is disposed above the cam 21 and is connected to a locking element 35. The locking element 35 is disposed between the mounting panel 14 and the cam 21 and is able to be driven by the lock 30 to abut against the cam 21, so as to restrict the cam 21 from rotating backwards and the handle 15 from pivoting. Accordingly, the storage box 10 would not be stolen. Alternatively, the locking element 35 is also able to be driven by the lock 30 to release the handle 15 when the lock 30 is unlocked. Specifically, the locking element 35 has a recess 352. The recess 352 is positioned toward the cam 21 and is used to receive the cam 21, so as to reduce a distance between the cam 21 and the mounting panel 14 and to avoid interference between the locking element 35 and the cam 21. Accordingly, arrangement of the lock 30 and the cam 24 is compact.

The storage box 10 may be further provided with a pressing element 17. The pressing element 17 is mounted on the mounting panel 14, is able to be pressed, and is connected with the lock 30. A resilient element 18 is disposed between the pressing element 17 and the case 11, so as to allow the pressing element 17 to return to an original position when being released from being pressed. The resilient element 18 has two ends respectively abutting against the case 11 and the lock 30. When the locking element 35 abuts against the cam 21, the pressing element 17 is restricted by the lock 30 from being pressed. Therefore, with mutual abutment of the locking element 35 and the cam 21, the pressing element 17 and the handle 15 are both restricted from being operated. The structure of simultaneously restricting the pressing element 17 and the handle 15 is simple and has reduced elements.

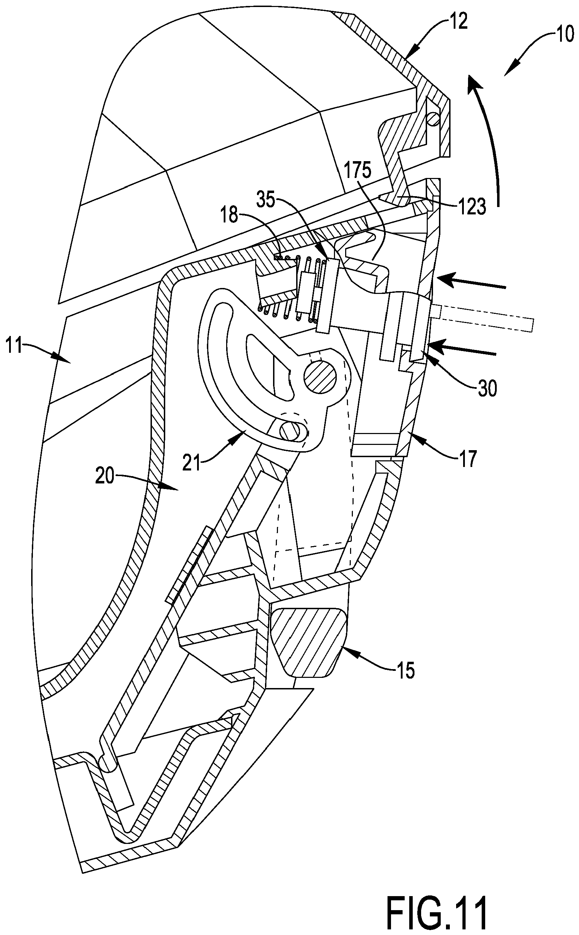

With reference to Figs. 6, 10, and 11, the pressing element 17 has an engaging portion 175. The engaging portion 175 is formed on a top of the pressing element 17. The cover 12 has a hook 123. When the cover 12 covers on the case 11, the hook 123 engages with the engaging portion 175 of the pressing element 17. When the lock 30 is unlocked, restriction of the lock 30 and the locking element 35 on the pressing element 17 is lifted and the pressing element 17 is able to be operated to release connection between the engaging portion 175 and the hook 123. Accordingly, the cover 12 can be opened. Therefore, with the restriction of the lock 30 and the locking element 35 on the pressing element 17, the cover 12 of the storage box 10 is prevented from being opened without permission.

With reference to Figs. 3 and 7, preferably, the storage box 10 further has a receiving recess 145. The receiving recess 145 may be formed in the case 11, corresponds in position to the handle 15 and is for receiving the handle 15, so as to allow the storage box 10 to have a flat appearance. The lock 30 and the pressing element 17 are disposed between the two side rods 152 of the handle 15 to make it easy for a rider to recognizer positions of the lock 30 and the pressing element 17 and to open the cover 12 of the storage box 10.

With reference to Figs. 1 to 3, the motorcycle 90 may be a motorcycle with two front wheels. The motorcycle 90 mainly includes the frame 91, the mounting support 95, a tilting unit 92, an engine 93, and a rear rocker arm 94. The mounting support 95 is assembled on the rear end of the frame 91. Ahead tube 911 is assembled on a front end of the frame 91 and is connected with a steering steam 912. The steering steam 912 is connected with a steering handlebar 913. The tilting unit 92 is connected to the head tube 911. When the motorcycle 91 turns, the tilting unit 92 drives a left front wheel 927 and a right front wheel 928 to relatively move up and down. Thus, the left and right front wheels 927, 928 would be on the ground simultaneously when the motorcycle 91 turns.

With reference to 2B, the tilting unit 92 mainly includes an upper cross bar 921, a lower cross bar 922, a left side bar 923, a right side bar 924, a left suspension unit 925, and a right suspension unit 926. The upper cross bar 921 is pivotally connected to the head tube 911. The lower cross bar 922 is pivotally connected to the head tube 911 and is disposed below the upper cross bar 921. The left side bar 923 is pivotally connected to the upper cross bar 921 and the lower cross bar 922 and is disposed on a left side of the upper cross bar 921 and the lower cross bar 922. ("The left side" here refers to the left hand side of the rider when the rider rides on the motorcycle 90.) The right side bar 924 is pivotally connected to the upper cross bar 921 and the lower cross bar 922 and is disposed on a right side of the upper cross bar 921 and the lower cross bar 922. ("The right side" here refers to the right hand side of the rider when the rider rides on the motorcycle 90.) The left suspension unit 925 connects a lower end of the left side bar 923 and the left front wheel 927. The right suspension unit 926 connects a lower end of the right side bar 924 and the right front wheel 928.

With reference to Fig. 1, the engine is securely mounted to the frame 91. The rear rocker arm 94 has a front end pivotally connected to the engine 93 via a pivot shaft 941 and a rear end connected to a rear wheel 945. When the motorcycle 90 is moving forward, the rear rocker arm 94 and the rear wheel 945 are able to swing up and down relative to the engine 93.

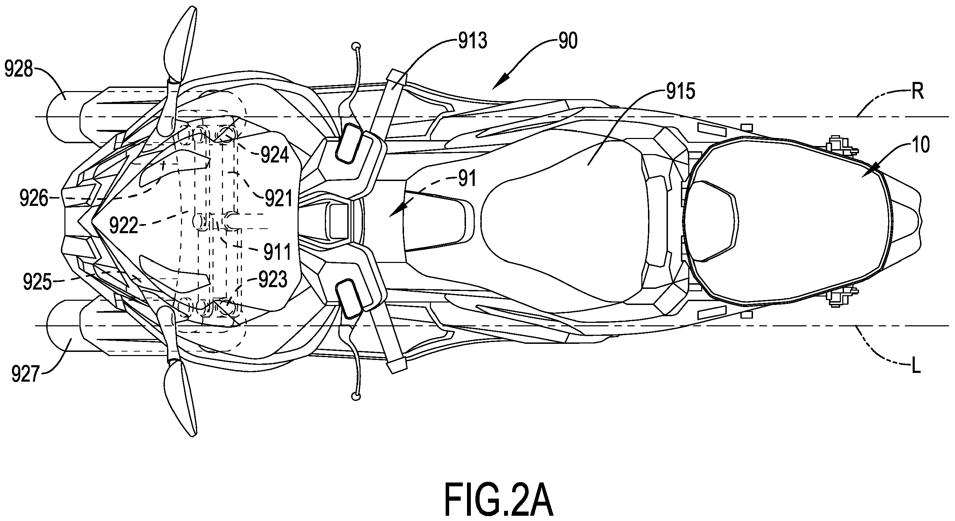

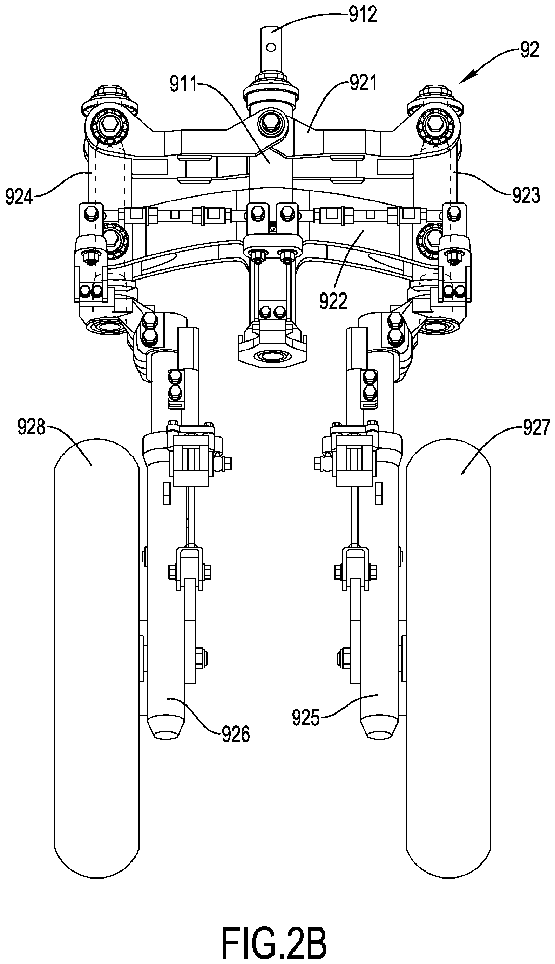

With reference to Fig. 2A, when seen from the top view, a width defined from left to right of the storage box 10 does not exceed a center line L of the left front wheel 927 and a center line R of the right front wheel 928, so as not to lose balance, crash, or collide with other things while riding due to the width of the storage box 10. Moreover, the handle 15 is disposed between the center line L of the left front wheel 927 and the center line R of the right front wheel 928. Thus, it is easy for the rider to recognize a position of the handle 15 in order to detach the storage box 10.

With reference to Fig. 1, when seen from the front view, a length defined from front to rear of the storage box 10 does not exceed a center of the pivot shaft 941 and a rear end of the rear wheel 945, such that a seat cushion 915 of the motorcycle 90 would not too short and a passenger on a rear part of the seat cushion 915 would not feel uncomfortable due to the over-long length of the storage box 10. When the handle 15 is disposed at the storing position, the handle 15 also does not exceeds the rear end of the rear wheel 945. The storage box 10 does not protrude out from the rear end of the rear wheel 945, and therefore, the motorcycle 90 may have a compact and pleasing appearance.

## Claims

1. A storage box (10) of a motorcycle (90), the storage box (10) being fitted on the motorcycle (90), the motorcycle (90) having a frame (91) and a mounting support (95) assembled on a rear end of the frame (91), the storage box (10) detachably mounted on the mounting support (95), and the storage box (10) **characterized in that**:
the storage box (10) is provided with a handle (15) and a connecting mechanism (20), and the handle (15) is selectively disposed at a storing position and a pulled-up position, wherein when the handle (15) is disposed at the pulled-up position, the handle (15) drives the connecting mechanism (20) to allow the storage box (10) to disengage from the mounting support (95); and
the storage box (10) is provided with a lock (30), the lock (30) is connected to a locking element (35), wherein when the lock (30) is unlocked, the locking element (35) is driven by the lock (30) to release the handle (15) such that the handle (15) is able to be operated to drive the connecting mechanism (20) to allow the storage box (10) to disengage from the mounting support (95).

2. A storage box (10) of a motorcycle (90), the storage box (10) being fitted on the motorcycle (90), the motorcycle (90) having a frame (91) and a mounting support (95) assembled on a rear end of the frame (91), the storage box (10) detachably mounted on the mounting support (95), and the storage box (10) **characterized in that**:
the storage box (10) is provided with a handle (15) and a connecting mechanism (20), and the handle (15) is selectively disposed at a storing position and a pulled-up position, wherein when the handle (15) is disposed at the pulled-up position, the handle (15) drives the connecting mechanism (20) to allow the storage box (10) to disengage from the mounting support (95); and
the motorcycle (90) includes a tilting unit (92), and the tilting unit (92) includes
a left suspension unit (925) connected to a left front wheel (927); and
a right suspension unit (926) connected to a right front wheel (928);
wherein a width defined from left to right of the storage box (10) does not exceed a center line (L) of the left front wheel (927) and a center line (R) of the right front wheel (928); and
the handle (15) is disposed between the center line (L) of the left front wheel (927) and the center line (R) of the right front wheel (928).

3. A storage box (10) of a motorcycle (90), the storage box (10) being fitted on a motorcycle (90), the motorcycle (90) having a frame (91) and a mounting support (95), the mounting support (95) assembled on a rear end of the frame (91) and having a connecting slot (951), the storage box (10) provided with a connecting hook (13), the connecting hook (13) detachably engaging in the connecting slot (951), and the storage box (10) **characterized in that**:
the storage box (10) is provided with a handle (15) and a connecting mechanism (20), the connecting mechanism (20) includes
a cam (21) driven by the handle (15);
a pushing rod (23) driven by the cam (21); and
a stopper (25) driven by the pushing rod (23) to selectively leave the connecting slot (951); and
the connecting mechanism (20) includes a slider (24) disposed between the pushing rod (23) and the stopper (25) and moving back and forth toward a front and a back of the motorcycle 90;
wherein when the slider (24) moves forward, the slider (24) pushes the stopper (25) and the stopper (25) moves upward to leave the connecting slot (951).

4. The storage box (10) of the motorcycle (90) as claimed in claim 3, wherein
the cam (21) is connected with the handle (15) via a rotating shaft (155); and
the storage box (10) is provided with a lock (30), the lock (30) is disposed above the cam (21), is connected to a locking element (35) and selectively drives the locking element (35) to abut against the cam (21), and the locking element (35) has a recess (352) positioned toward the cam (21).

5. The storage box (10) of the motorcycle (90) as claimed in claim 3, wherein
the storage box (10) has a case (11) and a cover (12), and the cover (12) is mounted on the case (11); and
the storage box (10) is provided with a lock (30) and a pressing element (17) and the lock (30) is connected to and selectively drives a locking element (35);
wherein when the locking element (35) abuts against the cam (21), the pressing element (17) is restricted from being operated.

6. The storage box (10) of the motorcycle (90) as claimed in claim 2 or 3, wherein
the storage box (10) has a case (11) and a cover (12), and the cover (12) is mounted on the case (11) and has a hook (123); and
the storage box (10) is provided with a lock (30) and a pressing element (17), the pressing element (17) has an engaging portion (175) engaging with the hook (123), and the lock (30) is connected to and selectively drives a locking element (35);
wherein when the lock (30) is unlocked, restriction of the locking element (35) on the pressing element (17) is lifted and the pressing element (17) is able to be operated to release connection between the engaging portion (175) and the hook (123).

7. The storage box (10) of the motorcycle (90) as claimed in claim 2 or 3, wherein the storage box (10) is provided with a lock (30) connected to and selectively driving a locking element (35);
wherein when the lock (30) is unlocked, the locking element (35) is driven by the lock (30) to release the handle (15) such that the handle (15) is able to be operated to drive the connecting mechanism (20) to allow the storage box (10) to disengage from the mounting support (95).

8. The storage box (10) of the motorcycle (90) as claimed in claim 2 or 3, wherein the storage box (10) has a case (11) and a cover (12) and is provided with a lock (30) and a pressing element (17), the cover (12) is mounted on the case (11), the case (11) has a receiving recess (145) corresponding in position to the handle (15) and being for receiving the handle (15), and the lock (30) and the pressing element (17) are disposed between two side rods (152) of the handle (15).

9. The storage box (10) of the motorcycle (90) as claimed in claim 1 or 3, wherein
the motorcycle (90) includes a tilting unit (92), and the tilting unit (92) includes
a left suspension unit (925) connected to a left front wheel (927); and
a right suspension unit (926) connected to a right front wheel (928);
wherein a width defined from left to right of the storage box (10) does not exceed a center line (L) of the left front wheel (927) and a center line (R) of the right front wheel (928); and
the handle (15) is disposed between the center line (L) of the left front wheel (927) and the center line (R) of the right front wheel (928).

10. The storage box (10) of the motorcycle (90) as claimed in claim 1 or 3, wherein
the motorcycle (90) includes a tilting unit (92), and the tilting unit (92) includes
a left suspension unit (925) connected to a left front wheel (927); and
a right suspension unit (926) connected to a right front wheel (928); and
the motorcycle (90) further includes
an engine (93); and
a rear rocker arm (94) connected to the engine (93) via a pivot shaft (941) and connected to a rear wheel (945), and the rear rocker arm (94) swinging on the pivot shaft (941);
wherein a length defined from front to rear of the storage box (10) does not exceed a center of the pivot shaft (941) and a rear end of the rear wheel (945); and
when the handle (15) is disposed at the storing position, the handle (15) does not exceeds the rear end of the rear wheel (945).

11. The storage box (10) of the motorcycle (90) as claimed in claim 1, wherein
the storage box (10) has a case (11) and a cover (12), and the cover (12) is mounted on the case (11) and has a hook (123); and
the storage box (10) is provided with a pressing element (17), and the pressing element (17) has an engaging portion (175) engaging with the hook (123);
wherein when the lock (30) is unlocked, restriction of the locking element (35) on the pressing element (17) is lifted and the pressing element (17) is able to be operated to release connection between the engaging portion (175) and the hook (123).

12. The storage box (10) of the motorcycle (90) as claimed in claim 1, wherein the storage box (10) has a case (11) and a cover (12) and is provided with a pressing element (17), the cover (12) is mounted on the case (11), the case (11) has a receiving recess (145) corresponding in position to the handle (15) and being for receiving the handle (15), and the lock (30) and the pressing element (17) are disposed between two side rods (152) of the handle (15).

13. The storage box (10) of the motorcycle (90) as claimed in claim 2, wherein the motorcycle (90) further includes
an engine (93); and
a rear rocker arm (94) connected to the engine (93) via a pivot shaft (941) and connected to a rear wheel (945), and the rear rocker arm (94) swinging on the pivot shaft (941);
wherein a length defined from front to rear of the storage box (10) does not exceed a center of the pivot shaft (941) and a rear end of the rear wheel (945); and
when the handle (15) is disposed at the storing position, the handle (15) does not exceeds the rear end of the rear wheel (945).
